Europäisches Patentamt

(19) European Patent Office

Office européen des brevets

(11) Numéro de publication: **0 194 208**
**B1**

(12) **FASCICULE DE BREVET EUROPEEN**

(45) Date de publication du fascicule du brevet:
**20.12.89**

(21) Numéro de dépôt: **86400488.2**

(22) Date de dépôt: **07.03.86**

(51) Int. Cl.⁴: **F41C 13/00, A22B 3/02,**
**B25C 1/10, F42B 39/00**

(54) Dispositif d'alimentation en cartouches d'un appareil fonctionnant à l'aide d'une charge explosive et chargeur destiné à alimenter ledit appareil.

(30) Priorité: **08.03.85 FR 8503417**

(43) Date de publication de la demande:
**10.09.86 Bulletin 86/37**

(45) Mention de la délivrance du brevet:
**20.12.89 Bulletin 89/51**

(84) Etats contractants désignés:
**BE CH DE GB IT LI LU NL**

(56) Documents cités:
**FR-A- 1 553 445**
**FR-A- 2 426 543**
**GB-A- 2 120 918**
**US-A- 3 520 400**
**US-A- 3 755 948**

(73) Titulaire: **Termet, Pierre, "Le Vieux Moulin",**
**F-01820 Villebois(FR)**
Titulaire: **ETABLISSEMENTS TERMET PERE & FILS,**
**13 et 16 Impasse Belloeuf, F-69391 Lyon(FR)**
Titulaire: **SOCIETE LYONNAISE D'ETUDES ET DE**
**FABRICATION INDUSTRIELLES S.a.r.l. SOLEFI,**
**16, Impasse Belloeuf, F-69003 Lyon(FR)**

(72) Inventeur: **Termet, Pierre, Le Vieux Moulin,**
**F-01820 Villebois(FR)**

(74) Mandataire: **Nony, Michel, Cabinet NONY & CIE 29, rue**
**Cambacérès, F-75008 Paris(FR)**

## Description

La présente invention est relative à un nouveau dispositif d'alimentation en cartouches d'un appareil fonctionnant à l'aide d'une charge explosive, tel par exemple qu'un pistolet de scellement ou un appareil d'abattage du bétail.

L'invention est également relative à un chargeur destiné à être utilisé dans ce dispositif.

L'invention se rapporte à des appareils du type correspondant au préambule de la revendication 1 et dans lequel, après que le canon ait été dégagé de la culasse par un mouvement de déverrouillage, cette dernière est susceptible de pivoter par rapport au canon autour d'un axe parallèle à l'axe de celui-ci, de telle sorte que par ce mouvement de pivotement, on puisse amener un canal d'alimentation contenant une ligne de cartouches en face du porte-cartouche disposé à l'arrière du canon, puis que par un mouvement inverse, on puisse procéder au verrouillage de la culasse pour mettre à feu la cartouche qui était ainsi engagée dans le porte-cartouche.

On connaît en particulier d'après les documents FR-A 2 426 543 et GB-A 2 120 918 des appareils de ce type munis de barillets tournants qui comportent plusieurs lignes de cartouches, les cartouches d'une même ligne étant consommées successivement après quoi il est nécessaire d'intervenir pour faire tourner le barillet et amener une nouvelle ligne de cartouches en face du canal d'alimentation de la chambre à cartouches.

On connaît également notamment par les documents US-A 3 755 948 et FR-A 1 553 445 des armes à feu qui comportent des lignes de cartouches réparties sur la périphérie de la culasse. Toutefois, les armes décrites dans ces documents ne permettent pas de faire tourner les lignes de cartouches par rapport à la culasse en agissant sur la paroi périphérique externe de la culasse.

La présente invention a pour objet de réaliser un appareil du type décrit dans le document FR-A 2 426 543 mais qui présente par rapport à cet appareil l'avantage d'être d'une construction simplifiée, d'un faible encombrement et d'un emploi facile.

La présente invention a pour objet un dispositif d'alimentation en cartouches d'un appareil fonctionnant à l'aide d'une charge explosive du type dans lequel après déverrouillage de la culasse le canon peut être pivoté par rapport à la culasse autour d'un axe parallèle à celui du canon de manière à amener dans l'axe de la chambre à cartouches l'un des canaux d'un barillet contenant une ligne de cartouches, caractérisé par le fait que les cartouches sont disposées en lignes parallèles dans un barillet comportant une paroi externe qui peut pivoter dans les deux sens autour de la culasse d'un angle qui correspond à la distance angulaire entre deux lignes de cartouches voisines et une paroi interne qui est susceptible de pivoter de manière continue autour de la culasse, un organe maintenant élastiquement la paroi interne, ainsi que les lignes de cartouches qui en sont angulairement solidaires, dans les différentes positions où les lignes de cartouches se trouvent dans l'axe du canal d'alimentation qui après déverrouillage de la culasse permet d'amener une cartouche dans l'axe du porte-cartouche, un dispositif tel qu'un cliquet faisant en sorte que lors des rotations alternées de la paroi externe de l'espace annulaire contenant les lignes de cartouches par rapport à la culasse, ces dernières se déplacent d'une ligne de cartouches à l'autre par rapport à la culasse dans un sens de rotation et ne subissent aucun déplacement dans l'autre sens de rotation.

Dans un mode de réalisation préféré de l'invention, les cartouches sont disposées dans une bande-chargeur, par exemple en matière plastique qui comporte une série de tubes susceptibles de recevoir chacun une ligne de cartouches, lesdits tubes étant reliés les uns aux autres de manière flexible afin que ladite bande puisse être enroulée dans l'espace annulaire autour de la culasse.

Dans un autre mode de réalisation préféré de l'invention les cartouches sont disposées dans un chargeur comportant une succession de tubes recevant chacun une ligne de cartouches, qui sont reliés les uns aux autres pour former une configuration de forme cylindrique.

Cette bande-chargeur et ce chargeur sont également des objets de l'invention.

Selon un mode de réalisation préféré de l'invention, l'espace annulaire qui reçoit les rangées de cartouches comporte une paroi externe dont le diamètre est sensiblement le même que celui de la partie avant de la culasse, et qui est susceptible de pivoter par rapport à cette dernière d'un angle qui correspond à la distance angulaire de deux lignes de cartouches.

La paroi interne de l'espace annulaire qui reçoit les lignes de cartouches, est susceptible de pivoter autour de la culasse de l'appareil, un organe de maintien tel qu'un système à bille repoussée par un ressort maintenant élastiquement cette paroi interne ainsi que les lignes de cartouches qui en sont angulairement solidaires, dans les positions où une ligne de cartouches se trouve dans l'axe du canal d'alimentation qui, après déverrouillage de la culasse, permet d'amener les cartouches dans l'axe du porte-cartouche.

Un dispositif à cliquet est tel, que lorsque l'on entraîne en rotations alternées, la paroi externe de l'espace annulaire contenant les lignes de cartouches, la paroi interne, et les lignes de cartouches qui en sont solidaires, se déplacent d'une ligne à l'autre de cartouches pour une rotation dans un sens, et ne subissent aucun déplacement dans l'autre sens du déplacement de la paroi externe de l'espace annulaire.

On conçoit que de la sorte, il est possible, lorsqu'une cartouche a été tirée, et après que l'on ait déverrouillé le canon de la culasse, d'agir sur la paroi externe de l'espace annulaire contenant les lignes de cartouches, pour amener une autre ligne de cartouches dans l'axe du canal d'alimentation du porte-cartouche situé dans le canon.

Ce mouvement de rotation de la paroi externe de l'espace annulaire qui contient les lignes de cartouches, peut d'ailleurs être utilisé pour faire pivoter dans un sens et dans l'autre, la culasse par rapport au canon après déverrouillage de ce dernier.

La présente invention est utilisable aussi bien sur des appareils utilisés par exemple pour l'abattage du bétail, qui ne comportent aucune crosse, et qui sont tenus par la partie cylindrique externe de la culasse, que sur les appareils à crosse qui sont communément utilisés pour fixer dans les matériaux divers, des goujons ou des chevilles.

Conformément à l'invention, il est souhaitable de disposer la gachette ou le levier de tir au voisinage du percuteur, de manière à éviter que ce dispositif n'interfère avec la bande-chargeur ou le chargeur conforme à l'invention.

Ceci peut être par exemple obtenu, dans le cas d'un appareil sans crosse à l'aide d'un levier de tir basculant autour d'un axe parallèle à l'axe du tir qui, dans la position de repos empêche que le marteau actionné par un ressort ne puisse venir percuter la tige du percuteur. La mise à feu s'effectue aisément en basculant le levier de tir qui libère alors le marteau.

Dans le but de mieux faire comprendre l'invention, on va en décrire maintenant à titre d'illustration, et sans aucun caractère limitatif plusieurs modes de réalisation pris comme exemples, et représentés sur le dessin annexé.

- La figure 1 est une coupe longitudinale de la culasse et de la partie arrière du canon d'un appareil d'abattage comportant le dispositif d'alimentation en cartouches selon l'invention.
- la figure 2 est une vue schématique de dessus de la figure 1 montrant le dispositif qui permet la limitation du débattement angulaire de la paroi externe de l'espace annulaire contenant les lignes de cartouches.
- la figure 3 est une vue en coupe selon III-III de la figure 1
- la figure 4 est une vue en bout de la bande-chargeur de cartouches,
- la figure 5 est une vue en coupe selon IV-IV de la figure 1,
- et la figure 6 est une vue en coupe longitudinale de la partie arrière du canon de la culasse et de la crosse d'un appareil de scellement, muni du dispositif d'alimentation en cartouches selon l'invention.

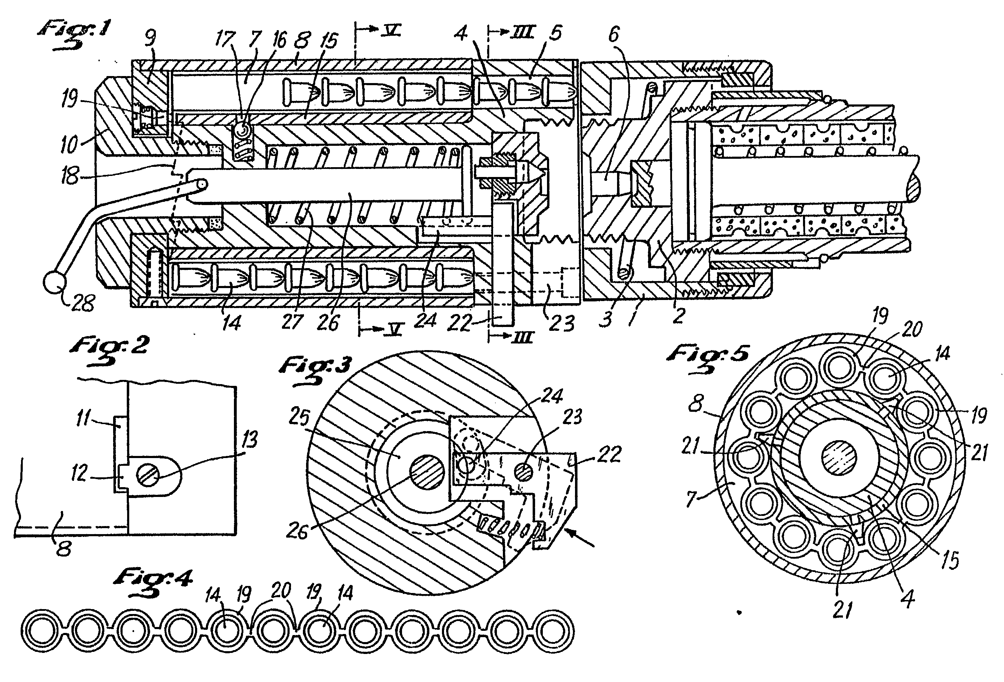

On voit sur la figure 1, le porte canon 1 à l'intérieur duquel coulisse la partie arrière du canon, qui est constamment repoussé vers la droite par le ressort 3, de manière à dégager, après le déverrouillage, le canon du plan de raccordement de la culasse 4 avec le porte canon 1.

En position déverrouillée, le canon peut, à la manière connue pivoter par rapport à la culasse autour d'un axe parallèle à l'axe du canon, mais qui est décalé par rapport à celui-ci, de manière à amener l'axe du canal d'alimentation 5 dans l'axe du porte cartouche 6.

Conformément à l'invention, les cartouches sont disposées dans un espace annulaire 7 disposé à la périphérie externe de la culasse 4.

Cet espace 7 est délimité par une paroi externe 8, qui est munie d'un fond 9 maintenu par un bouchon 10, vissé sur la culasse. La paroi externe 8 est montée de telle manière, qu'elle peut pivoter librement par rapport à la culasse 4.

Toutefois, comme représenté en vue externe sur la figure 2, la paroi externe 8 possède une échancrure 11, à l'intérieur de laquelle s'engage un ergot 12, solidaire de la culasse grâce à une vis 13. Les dimensions de l'échancrure 11 et de l'ergot 12 sont telles que le débattement angulaire de la paroi externe 8 correspond à la distance angulaire séparant deux lignes de cartouches 14 dans l'espace annulaire 7.

L'espace 7 comporte également une paroi interne 15 qui est susceptible de pivoter librement autour de la partie externe cylindrique de la culasse 4.

La culasse comporte un dispositif à bille 16 repoussée par un ressort qui est susceptible de s'engager dans une série d'orifices 17 disposés sur la périphérie de la paroi 15 à des distances angulaires correspondant aux distances angulaires qui séparent les différentes lignes de cartouches 14.

On conçoit, que grâce à ce dispositif à bille 16 qui s'engage dans les orifices 17, on obtient un encliquetage de la paroi interne 15 qui peut correspondre à l'alignement d'une quelconque ligne de cartouches 14 avec l'axe du canal d'alimentation 5.

La partie d'extrémité située à gauche de la paroi 15 a une forme de crémaillère 18, comme représentée en traits interrompus sur la figure 1. Le fond 9 de la paroi externe 8 comporte un cliquet à ressort 19 qui coopère avec la crémaillère 18, de telle sorte que dans un sens de rotation de la paroi 8, la paroi interne 15 se trouve entraînée dans la même rotation, alors que dans l'autre sens, cette paroi interne 15 est immobilisée par la bille à ressort 16.

On conçoit également, qu'après avoir déverrouillé le canon 2, en tenant d'une main le canon, et de l'autre la paroi externe 8 de l'espace annulaire contenant les cartouches, on peut provoquer tout d'abord un pivotement du canon 2 par rapport à la culasse 4, tandis que les cartouches 14 restent immobiles par rapport à la culasse 4, le cliquet 19 venant s'engager sur la dent suivante de la crémaillère 18. On introduit alors par gravité une cartouche 14 dans la chambre à cartouche 6 qui par le mouvement de pivotement précédent a été amenée dans l'alignement du canal d'alimentation 5. On fait pivoter le canon 2 en sens inverse pour le ramener dans l'axe de la culasse 4 et on vérouille la culasse en continuant le mouvement de pivotement. Enfin en terminant le pivotement on provoque la rotation de la paroi externe 8 qui amène une nouvelle ligne de cartouches dans l'axe du canal d'alimentation.

On a également représenté sur les figures 4 et 5, la disposition de la bande-chargeur. Comme on le voit sur la figure 4, cette bande est constituée par un série de tubes 19 qui contiennent chacun une ligne de cartouches 14, et qui sont réunis entre eux par des zones 20.

Les tubes 19 et les parties 20 sont de préférence réalisés en matière plastique, de manière à obtenir facilement une flexibilité de la bande-chargeur qui peut prendre la forme circulaire qui a été représentée sur la figure 5.

Sur cette figure, on retrouve l'espace annulaire qui est délimité par sa paroi externe 8 et sa paroi interne 15 qui pivote autour de la culasse 4.

On voit également sur la figure 5, les tubes 19 reliés par les parties 20 qui contiennent les lignes de cartouches 14.

Dans un autre mode de réalisation les tubes 19 sont réunis entre eux de manière rigide par les parties 20 de manière à avoir une configuration circulaire.

Dans un mode de réalisation préféré de l'invention les tubes 19 sont obturés de façon permanente à une extrémité pour faciliter le chargement en cartouches et une obturation amovible, par exemple constituée par une feuille autocollante, est placée à l'autre extrémité des tubes et est enlevée au moment où le chargeur est placé sur l'appareil conforme à l'invention.

La paroi externe 8 et le chargeur sont de préférence en matière plastique transparente de manière à pouvoir voir les cartouches contenues dans le chargeur.

Comme on l'a compris lors de l'explication du fonctionnement qui a été donné ci-dessus, il est nécessaire que les lignes de cartouches 14 soient solidaires en rotation de la paroi interne 15 de l'espace annulaire 7 qui les contient.

Ceci peut être obtenu par différents moyens. Dans le mode de réalisation de la figure 5, on a disposé sur la périphérie de la paroi interne 15, des tétons 21 qui se glissent entre deux tubes 19 contigus assurant ainsi le positionnement des lignes de cartouches par rapport à la paroi 15.

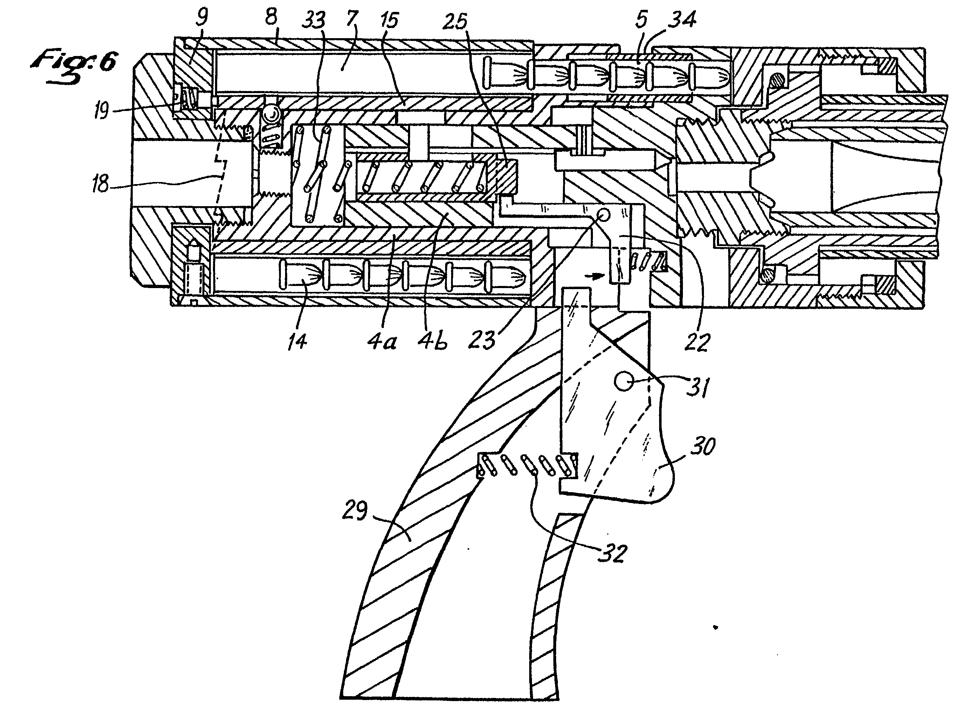

On a représenté sur la figure 3, le dispositif de mise à feu qui dans ce mode de réalisation, est constitué par un levier 22, pivotant autour d'un axe 23 et qui est muni d'une tige 24 susceptible de s'engager devant la tête 25 du marteau de percussion 26 qui est constamment repoussé par le ressort 27. Un ressort représenté sur la figure 3, repousse en permanence le levier de mise à feu dans une position telle que la tige 24 vient se placer devant la tête 25 du marteau de mise à feu et empêche la percussion.

Dans la position représentée sur la figure 1, une cartouche vient d'être tirée, la culasse a été déverrouillée et la douille de la cartouche a été éjectée. La tête du marteau de percussion n'a pas été tirée vers l'arrière en comprimant le ressort 27, de telle sorte que la tige 24 du dispositif de mise à feu s'appuie latéralement sur la tête 25 du marteau.

Après qu'une cartouche soit engagée dans la chambre à cartouche 6 et que la culasse a été à nouveau verrouillée, il suffit à l'aide de la tirette 28, d'armer le marteau de percussion pour que sa tête 25 vienne au-delà de l'extrémité de la tige 24 qui sous l'action du basculement de l'organe de mise à feu, vient se placer grâce à son ressort devant la tête 25 du marteau de percussion.

On conçoit alors qu'il suffise d'appuyer sur l'organe de mise à feu dans le sens de la flèche de la figure 3 pour que le marteau de percussion soit libéré, et que la cartouche soit mise à feu.

On a représenté en traits interrompus sur la figure 3, la position de la pièce 22 lorsqu'elle est basculée pour réaliser la mise à feu.

On a représenté sur la figure 6, une vue en coupe d'un pistolet de scellement à crosse comportant le dispositif d'alimentation selon l'invention.

On retrouve sur la figure 6, les pièces qui ont été décrites sur la figure 1.

Cependant, le dispositif de la figure 6, comporte une culasse réalisée en deux parties 4a et 4b qui sont susceptibles de coulisser axialement l'une par rapport à l'autre, de manière à permettre une sécurité telle que, pour que la mise à feu puisse être effectuée, il est nécessaire que l'on applique sur la crosse 29, solidaire de la partie arrière 4a de la culasse un effort suffisant pour comprimer le ressort 33 qui repousse constamment vers la droite la partie 4b de la culasse.

Lorsque cet effort est exercé, la partie 4a de la culasse et la crosse 29 se déplacent vers la droite de telle sorte qu'en faisant basculer la détente 30 autour de son axe 31, en comprimant le ressort 32, on agit dans le sens de la flèche sur l'organe de mise à feu 22 qui bascule autour de son axe 23 et qui libère le marteau 25, lequel peut alors venir frapper le percuteur et provoquer la mise à feu de la cartouche.

Pour tenir compte de ce mouvement relatif des deux parties 4a et 4b de la culasse, le canal d'alimentation 5 comporte une pièce coulissante 34 qui assure un guidage permanent des cartouches et ceci malgré la variation de longueur de ce canal.

Le fonctionnement de cet appareil est le même que pour l'appareil de la figure 1, la manipulation de chargement s'effectuant avec une main sur le canon et une main sur la paroi externe 8 qui entoure la culasse.

On voit que, conformément à l'invention, il est possible de disposer sur la périphérie de la culasse, en conservant à celle-ci un diamètre qui est sensiblement égal au diamètre de la partie arrière du canon, (c'est-à-dire avec un faible encombrement), un nombre important de cartouches par exemple une centaine qui peuvent être stockées sous forme de bandes et qui peuvent être facilement engagées dans l'orifice circulaire 7 par un simple dévissage du bouchon 10.

On voit également qu'à l'aide d'une manoeuvre simple correspondant au mouvement naturel pour déverrouiller le canon de la culasse et pour amener le canal d'alimentation en face de la chambre à cartouche, on provoque des rotations successives pour amener successivement chacune de ces lignes dans l'axe du canal d'alimentation, de telle sorte que les lignes des cartouches sont utilisées successivement, ce qui présente l'avantage de consommer progressivement les cartouches de chaque ligne.

Il est clair que le dispositif de maintien des lignes de cartouches dans l'axe du canal d'alimentation peut être réalisé d'une manière différente que celle qui a été décrite, ainsi d'ailleurs que le dispositif d'encliquetage qui permet de faire pivoter les cartouches d'un angle correspondant pour amener une nouvelle ligne de cartouches dans l'axe du canal d'alimentation.

## Revendications

1. Dispositif d'alimantation en cartouches d'un appareil fonctionnant à l'aide d'une charge explosive du type dans lequel après déverrouillage de la culasse le canon peut être pivoté par rapport à la culasse autour d'un axe parallèle à celui du canon de manière à amener dans l'axe de la chambre à cartouches l'un des canaux d'un barillet contenant une ligne de cartouches, caractérisé par le fait que les cartouches (14) sont disposées en lignes parallèles dans un barillet comportant une paroi externe (8) qui peut pivoter dans les deux sens autour de la culasse (4) d'un angle qui correspond à la distance angulaire entre deux lignes de cartouches voisines et une paroi interne (15) qui est susceptible de pivoter de manière continue autour de la culasse (4), un organe (16, 17) maintenant élastiquement la paroi interne (15), ainsi que les lignes de cartouches qui en sont angulairement solidaires, dans las différentes positions où les lignes de cartouches se trouvent dans l'axe du canal d'alimentation (5) qui après déverrouillage de la culasse permet d'amener une cartouche dans l'axe du porte-cartouches, un dispositif tel qu'un cliquet (19) faisant en sorte que lors des rotations alternées de la paroi externe (8) de l'espace annulaire (7) contenant les lignes de cartouches par rapport à la culasse, ces dernières se déplacent d'une ligne de cartouches à l'autre par rapport à la culasse dans un sens de rotation et ne subissent aucun déplacement dans 1, autre sens de rotation.

2. Dispositif selon la revendication 1, caractérisé par le fait que la paroi externe (8) de l'espace annulaire (7) est munie d'un cliquet (19) qui coopère avec une crémaillère (18) solidaire de la paroi interne (15) de l'espace annulaire (7).

3. Dispositif selon l'une quelconque des revendications 1 et 2, caractérisé par le fait que le maintien d'une ligne de cartouches (14) dans l'axe du canal d'alimentation (5) est obtenu à l'aide d'une bille (16) poussée par un ressort, solidaire de la culasse (4) qui s'engage dans des orifices (17) pratiqués dans la paroi interne (15) de l'espace annulaire.

4. Dispositif selon l'une quelconque des revendications précédentes, caractérisé par le fait qu'un dispositif de mise à feu (22) est situé au voisinage du plan de raccordement entre la culasse (4) et le canon (2), ce dispositif évitant la mise à feu en servant de butoir à la tête du marteau de percussion (25) pour que cette dernière ne vienne pas au contact du percuteur si ce n'est au moment de la mise à feu.

5. Chargeur utilisable dans le dispositif selon 1, une quelconque des revendications précédentes, caractérise par le fait qu'il est constitué par une série de tubes (19) contenant chacun une file de cartouches (14) et qui sont reliés les uns aux autres de telle sorte que le chargeur puisse être disposé dans l'espace annulaire (7) autour de la culasse (4).

6. Chargeur selon la revendication 5, caractérisé par le fait que les tubes (19) sont réunis entre eux de manière flexible pour se présenter lors du stockage sous la forme d'une bande.

7. Chargeur selon la revendication 5, caractérisé par le fait que les tubes (19) sont réunis selon une configuration circulaire.

8. Chargeur selon 1, une quelconqus des revendications 5 à 7, caractérisé par le fait qu'il est réalisé en matière plastique.

9. Chargeur selon l'une quelconque des revendications 5 à 8, caractérise par le fait qu'il est réalisé en une matière plastique transparante pour être utilisé dans un appareil dans lequel la paroi externe (8) de 1, espace annulaire (7) est également transparente pour permettre de voir les cartouches contenues dans le chargeur.

## Claims

1. A cartridge feed device for an apparatus actuated by an explosive charge of the type in which, after the release of the breech, the barrel can be pivoted relative to the breech about an axis parallel to that of the barrel in such manner that one of the channels of a cylinder containing a row of cartridges is brought into alignment with the axis of the cartridge chamber, characterised in that the cartridges (14) are arranged in parallel rows in a cylinder which comprises an external wall (8) which can rotate in both directions about the breech (4) by an angle which corresponds to the angular distance between two adjacent rows of cartridges, an internal wall (15) which can be rotated in a continuous fashion about the breech (4), an element (16, 17) which elastically maintains the internal wall (15) and likewise the rows of cartridges which are angularly fixed relative thereto in the different positions in which the rows of cartridges are located in alignment with the axis of the feed channel (5) which, after the release of the breech, permits a cartridge to be brought into alignment with the axis of the cartridge container, a device such as a ratchet (19) (sic) ensuring that during alternate rotations of the external wall (8) of the annular space (7), which contains the rows of cartridges, relative to the breech, the cartridges are displaced from one row to another relative to the breech in one direction of rotation and do not experience any displacement in the other direction of rotation.

2. A device as claimed in claim 1, characterised in that the external wall (8) of the annular space (7) is provided with a pawl (19) which cooperates with a toothed rack (18) which is integral with the internal wall (15) of the annular space (7).

3. A device as claimed in one of the claims 1 and 2, characterised in that a row of cartridges (14) is maintained in alignment with the axis of the feed channel (5) by means of a ball (16) subject to the pressure of a spring and rigidly fixed to the breech (4) which engages in the orifices (17) formed in the internal wall (15) of the annular space.

4. A device as claimed in any one of the preceding claims, characterised in that a firing device (22) is located in the vicinity of the junction plane between the breech (4) and the barrel (2), which device prevents firing in that it serves as a stop for the head of the hammer (25) in order to prevent the latter from contacting the firing pin except at the instant of firing.

5. A magazine which can be employed in the device claimed in any of the preceding claims, characterised in that it is formed by a series of tubes (19), each of which contains a line of cartridges (14) and which are connected one to another so that the magazine can be arranged in the annular space (7) surrounding the breech.

6. A magazine as claimed in claim 5, characterised in that the tubes (19) are connected one to another in a flexible fashion so as to form a strip during storage.

7. A magazine as claimed in claim 5, characterised in that the tubes (19) are inter-connected in accordance with a circular configuration.

8. A magazine as claimed in any one of the claims 5 to 7, characterised in that it is made of plastic material.

9. A magazine as claimed in any one of the claims 5 to 8, characterised in that it is made of a transparent plastic material in order that it can be used in an apparatus in which the external wall (8) of the annular space (7) is likewise transparent so as to allow the cartridges contained in the magazine to be seen.

## Patentansprüche

1. Patronenzuführvorrichtung für ein treibladungsgetriebenes Gerät jener Art, bei welcher nach der Entriegelung des Verschlusses der Lauf bezüglich des Verschlusses um eine Achse geschwenkt werden kann, die zu jener des Verschlusses parallel ist, um einen der Kanäle einer Trommel, der eine Reihe von Patronen enthält, in die Achse des Patronenlager zu bringen, gekennzeichnet durch den Umstand, daß die Patronen (14) in parallelen Reihen in einer Trommel angebracht sind, die eine Außenwand (8), die sich in beiden Richtungen um den Verschluß (4) um einen Winkel drehen kann, der dem Winkelabstand zwischen zwei benachbarten Patronenreihen entspricht, und eine Innenwand (15) aufweist, die imstande ist, sich kontinuierlich um den Verschluß (4) zu drehen, durch eine Einrichtung (16, 17), die elastisch die Innenwand (15) sowie Patronenreihen, die hieran in festem Winkelabstand angeordnet sind, in den verschiedenen Lagen hält, wo sich die Patronenreihen in der Achse des Zuführkanales (5) befinden, der es nach dem Entriegeln der Verschlusses gestattet, eine Patrone in die Achse des Patronenlagers zu bringen, und durch eine Vorrichtung, etwa eine Sperrklinke (19), die so wirksam ist, daß sich während der alternierenden Drehungen der Außenwand (8) des Ringraumes (7), der die Patronenreihen enthält, in Bezug auf den Verschluß diese von einer Patronenreihe zur anderen in nur einer Drehrichtung verlagern und keine Verlagerung in der anderen Drehrichtung erfahren.

2. Vorrichtung nach Anspruch 1, dadurch gekennzeichnet, daß die Außenwand (8) des Ringraumes (7) mit einer Sperrklinke (19) versehen ist, die mit einer Zahnleiste (18) zusammenwirkt, die mit der Innenwand (15) des Ringraumes (7) verbunden ist.

3. Vorrichtung nach einem beliebigen der Ansprüche 1 und 2, dadurch gekennzeichnet, daß die Halterung einer Reihe von Patronen (14) in der Achse des Zuführkanals (5) mit Hilfe einer Kugel (16) erreicht wird, die durch eine Druckfeder belastet ist, mit dem Verschluß (4) verbunden ist und in Öffnungen (17) eingreift, die in die Innenwand (15) des Ringraumes eingebracht sind.

4. Vorrichtung nach einem beliebigen der vorangehenden Ansprüche, dadurch gekennzeichnet, daß nahe der Verbindungsebene zwischen Verschluß (4) und Lauf (2) eine Zündvorrichtung (22) angeordnet ist, und daß diese Vorrichtung die Zündung dadurch verhindert, daß sie als Anschlag für den Kopf des Schlagstückes (25) dient, damit dieser nur zum Zeitpunkt der Zündung mit dem Schlagbolzen in Berührung gelangt.

5. Magazin zur Verwendung mit einer Vorrichtung nach einem beliebigen der vorangehenden Ansprüche, dadurch gekennzeichnet, daß es aus einer Reihe von Röhren (19) gebildet ist, die jeweils eine Säule von Patronen (14) enthalten und miteinander so verbunden sind, daß das Magazin im Ringraum (7) rund um den Verschluß (4) angeordnet werden kann.

6. Magazin nach Anspruch 5, dadurch gekennzeichnet, daß die Röhren (19) flexibel miteinander verbunden sind, damit sie bei der Lagerung in Form eines Bandes vorliegen.

7. Magazin nach Anspruch 5, dadurch gekennzeichnet, daß die Röhren (19) in einer kreisförmigen Anordnung verbunden sind.

8. Magazin nach einem beliebigen der Ansprüche 5 bis 7, dadurch gekennzeichnet, daß es aus Kunststoff gebildet ist.

9. Magazin nach einem beliebigen der Ansprüche 5 bis 8, dadurch gekennzeichnet, daß es aus einem transparenten Kunststoff gebildet ist, um in einem Gerät verwendet zu werden, dessen Außenwand (8) des Ringraumes (7) ebenfalls transparent ist, um es zu ermöglichen, daß man die im Magazin enthaltenen Patronen sehen kann.

Fig.1

Fig.2

Fig.3

Fig.4

Fig.5

Fig. 6